(19) Europäisches Patentamt
European Patent Office
Office européen des brevets

(11) **EP 4 096 994 B1**

(12) **EUROPÄISCHE PATENTSCHRIFT**

(45) Veröffentlichungstag und Bekanntmachung des Hinweises auf die Patenterteilung:
**27.03.2024   Patentblatt 2024/13**

(21) Anmeldenummer: **21701110.5**

(22) Anmeldetag: **19.01.2021**

(51) Internationale Patentklassifikation (IPC):
**B62J 27/00** (2020.01)    **B62J 45/414** (2020.01)
**B62J 50/20** (2020.01)    **B60R 21/0132** (2006.01)

(52) Gemeinsame Patentklassifikation (CPC):
**B62J 27/00; B60R 21/013; B62J 45/414; B62J 50/20;** B60R 2021/0088; B60W 2030/082

(86) Internationale Anmeldenummer:
**PCT/EP2021/051031**

(87) Internationale Veröffentlichungsnummer:
**WO 2021/151724 (05.08.2021 Gazette 2021/31)**

(54) **VERFAHREN UND VORRICHTUNG ZUR KLASSIFIZIERUNG EINES UNFALLVORGANGS MIT EINEM ZWEIRAD**

METHOD AND DEVICE FOR CLASSIFICATION OF AN ACCIDENT OF A TWO-WHEELED VEHICLE

MÉTHODE ET DISPOSITIF DE CLASSIFICATION D'UN ACCIDENT D'UN VÉHICULE À DEUX ROUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.01.2020   DE 102020201223**

(43) Veröffentlichungstag der Anmeldung:
**07.12.2022   Patentblatt 2022/49**

(73) Patentinhaber: **Robert Bosch GmbH**
**70442 Stuttgart (DE)**

(72) Erfinder:
• **STEGMAIER, Juergen**
**72827 Wannweil (DE)**
• **SCHNEE, Jan**
**71093 Weil Im Schoenbuch (DE)**

(56) Entgegenhaltungen:
**EP-A1- 2 908 299          EP-A2- 2 096 004
DE-A1-102009 036 828    DE-A1-102010 027 969
JP-A- 2010 055 261**

**Beschreibung**

Die Erfindung betrifft ein Verfahren und eine Vorrichtung zur Klassifizierung einer Unfallsituation mit einem Zweirad, insbesondere eines Unfalls mit einem Elektrofahrrad.

Stand der Technik

Mittels einer Reihe von Sensoren, die an einem Zweirad, zum Beispiel einem Fahrrad und insbesondere an einem Elektrofahrrad, befestigt sind, können sowohl der Betrieb des Zweirads als auch der Fahrzustand überwacht werden. So können Geschwindigkeitssensoren die Radgeschwindigkeit und daraus abgeleitet die Zweiradgeschwindigkeit erfasst werden. Weiterhin können Neigungssensoren oder auch Beschleunigungs- beziehungsweise Drehratensensoren die Verkippung oder Neigung auf der Fahrbahn und Sensoren an der Tretkurbel eines Fahrrads die Fahrtätigkeit erfassen.

Aus der Auswertung dieser erfassten Sensorgrößen können kritische Situationen oder sogar Unfälle erkannt werden, beispielsweise indem das zeitliche Verhalten dieser Sensorgrößen überwacht werden. Diese erkannten kritischen Situationen oder auch Unfälle können dazu genutzt werden, automatisch Hilfe anzufordern oder zumindest eine Information an Dritte weiterzugeben.

Die Aufgabe der vorliegenden Erfindung besteht dabei darin, einen Unfall zu klassifizieren, so dass z.B. ein Unfallereignis in Form einer kritischen Situationen von einem Umfallen des Rades ohne direkte Kollision unterschieden werden kann. In der DE 10 2009 036 828 A1 ist ein System und Verfahren zur Erkennung einer Unfallsituation und Notrufaktivierung mit einem Schutzhelm beschrieben, welches eine Bewegungsröße, eine Orientierungsgröße und eine Aufprallgröße erfasst.

Offenbarung der Erfindung

Die vorliegende Erfindung betrifft ein Verfahren zur Klassifizierung eines Unfallvorgang eines Zweirads, insbesondere eines Fahrrads. Dabei kann das erfindungsgemäße Verfahren in einer Vorrichtung mit einer Auswerteinheit als Algorithmus ablaufen, um dem Fahrer des Zweirads oder einem Dritten mittels einer entsprechenden erzeugten und/oder ausgesandten Information eine Kollision oder ein Umfalles des Zweirads anzuzeigen. Die Vorrichtung kann dabei bei einem Zweirad, wie einem Fahrrad oder insbesondere bei einem Elektrofahrrad eingesetzt werden. Selbstverständlich ist der Einsatz jedoch auch bei einem Motorrad oder einem anderen einspurigen Fahrzeug möglich.

Zur Durchführung der Klassifizierung des Unfallvorgangs wird wenigstens eine Bewegungsgröße, eine Kollisionsgröße, eine Orientierungsgröße und eine Aufprallgröße erfasst beziehungsweise aus den erfassten Sensorgröße gebildet, um aus einer Zusammenschau der einzelnen Größen wenigstens eine Klassifizierungsgröße abzuleiten beziehungsweise zu generieren. Die Klassifizierungsgröße kann dabei sowohl in digitaler Form als auch in Form eines numerischen Werts, einer Datenbank oder eines Vektors erzeugt werden.

Mittels der Berücksichtigung mehrerer Größen, die sowohl die Unfallsituation als auch die Fahrparameter des Zweirads beschreiben, kann die Erkennung eines Unfalls plausibilisiert und somit verbessert werden. Indem eine Klassifizierung in Abhängigkeit mehrerer Größen oder Werte vorgenommen wird, kann zudem neben einer reinen Erkennung eines Unfalls auch die Schwere des Unfalls erkannt werden. Indem neben der Unfallerkennung auch die Schwere erkannt wird, kann eine herbeigerufene Hilfe oder Rettung schon vorab über mögliche notwendige Unterstützungen informiert werden. Weiterhin ist durch die Klassifizierung auch möglich, Unfallsituationen ohne Fahrerbeteiligung zu erkennen, so dass der Fahrer beispielsweise über ein Umfallen des abgestellten Zweirads informiert werden kann, wenn er sich nicht in der Nähe des Zweirads befindet.

Durch die Klassifizierung mit der damit zusammenhängenden Erzeugung von Klassifizierungsgrößen können unterschiedliche Gegebenheiten und Unfallsituation voneinander unterschieden werden. Wird dabei beispielsweise erkannt, dass ein Unfall stattgefunden hat, der mit hoher Wahrscheinlichkeit mit einem Personenschaden z.B. des Fahrers des Zweirads verbunden ist, kann das erfindungsgemäß Verfahren einen Notruf erzeugen und an eine entsprechende Stelle absenden. Durch die erfassten Sensorgrößen zur Ableitung der Klassifizierung kann darüber hinaus ein schwerer Unfall mit erheblichem Personenschaden von einem leichten Unfall mit nur geringem Personenschaden unterschieden werden. Durch diese zusätzliche Information, die sich erfindungsgemäß aus der erzeugten Klassifizierungsgröße ableiten lässt, kann das zur Hilfe gerufene Notfallteam entsprechend über die erforderlichen Hilfemaßnahmen vorab informiert werden.

In einer weiteren Ausgestaltung kann vorgesehen sein, dass das Verfahren bei Erkennung einer entsprechenden Unfallsituation beziehungsweise Klassifizierungsgröße direkt auf Komponenten des Zweirads einwirkt, um weiteren Schaden, insbesondere beim Fahrer oder anderen Personen, zu verhindern. So ist denkbar, dass bei einem Unfall ein elektrischer oder motorisch betriebener Antrieb des Zweirads abgeschaltet wird. Optional oder zusätzlich kann auch eine weitere Komponente, wie beispielsweise eine akustische und/oder optische Warneinrichtung aktiviert werden.

Als Bewegungsgröße kann das Verfahren jedweder Sensorgröße erfassen, die die Bewegung des Zweirads charakterisiert. Dabei ist insbesondere vorgesehen, dass die Bewegungskomponenten in der Längs- oder Fahrtrichtung beziehungsweise in der Querrichtung zur Langs-/Fahrtrichtung erfasst werden, um so die Bewegung des Zweirads in der Bewegungsebene, d.h. auf der Fahrbahn zu charakterisieren. Typische Sensorgrößen, die die Bewegung in zumindest einer Raumrichtung repräsentieren, sind Geschwindigkeitsgrößen und/oder Beschleunigungsgrößen. Hierbei kann sowohl die Geschwindigkeit als auch die Beschleunigung jeweils je nach Bewegungsrichtung in eine Komponente in Längsrichtung des Zweirads oder in eine Komponente in Querrichtung des Zweirads, senkrecht zur Längsrichtung, aufgetrennt und separiert sein. Durch diese Separierung können die Bewegungen in der Bewegungsebene deutlich voneinander unterschieden werden, so dass eine Klassifizierung zwischen einem frontalen Auffahrunfall und einem seitlichen Umfallen ermöglicht wird. Optional kann auch vorgesehen sein, dass jeweils eine Bewegungskomponente in Richtung der Hochachse erfasst wird. Da sich das Zweirad typischerweise entlang seiner Längsrichtung oder auch Längsachse bewegt, entspricht diese Längsrichtung üblicherweise der Fahrtrichtung des Zweirads. Allenfalls bei Kurvenfahrten kann es hier zu einer zumeist temporären Unterscheidung kommen. Diese Unterscheidung spielt sich jedoch auch in der zusätzliche Bewegungskomponenten in der Querrichtung oder auch in Richtung der Querachse wieder, so dass keine gesonderte Betrachtung nötig ist.

Als Kollisionsgröße erfasst das erfindungsgemäße Verfahren eine Größe, die eine Kollision des Zweirads mit einem weiteren Gegenstand oder einer Person repräsentiert, der oder die sich insbesondere auf der Fahrbahn oder in der Bewegungsebene des Zweirads befindet. Hierbei wird ein nicht weiter ausgeführtes Verfahren oder eine Vorrichtung verwendet, die dem erfindungsgemäßem Verfahren eine Information über eine aufgetretene Kollision mitteilt. Optional kann auch vorgesehen sein, dass das erfindungsgemäß Verfahren erst durch die Erzeugung einer Kollisionsinformation gestartet wird. Denkbar ist auch, dass die Kollisionsgröße durch die Auswertung der Bewegungsgröße und/oder der hierfür zugrunde liegenden Geschwindigkeits- und/oder Beschleunigungsgrößen erzeugt wird. So kann durch eine zeitliche Änderung der Geschwindigkeit und/oder der Beschleunigung z.B. in Längsrichtung ein Auffahrunfall erkannt werden, wenn sich die Geschwindigkeit innerhalb einer sehr kurzen Zeit verringert, insbesondere auf Null fällt, insbesondere ohne dass ein Bremseingriff detektiert wird.

Eine weitere Größe, die bei der Klassifizierung erfasst wird, stellt die Orientierungsgröße dar. Diese Orientierungsgröße kann sowohl die Veränderung der Orientierung des Zweirads repräsentieren als auch dessen aktuelle Orientierung. So ist denkbar, dass eine aktuelle Orientierung erkannt wird, wenn sich der Rollwinkel $\varphi$ und der Nickwinkel $\theta$ nicht über einen vorgegebenen Zeitraum ändert. Durch die dabei erfasste Winkeländerung kann unterschieden werden, ob das Zweirad aufrecht steht oder auf der Fahrbahn oder dem Boden liegt. Darüber hinaus sind jedoch auch weitere Orientierungen denkbar, beispielsweise bei einem schräg an eine Wand angelehnten Zweirad. Je nachdem, welche weiteren erfassten Größen vorliegen, kann so die Klassifizierung durch eine Klassifizierungsgröße festgelegt werden, die einer bestimmten Situation, insbesondere Unfallsituation zugeordnet ist.

Die Orientierungsgröße kann auch in Form einer dynamischen Größe erfasst werden, indem die Änderung des Rollwinkels und/oder des Nickwinkels erfasst wird. Hierbei kann aufgrund der Schnelligkeit der Änderung ebenfalls eine Klassifizierung erfolgen, indem bestimmte schnelle Änderungen eher einem Unfall als einer bewussten Bewegung des Zweirads zugeordnet werden.

In einer Weiterbildung der Erfindung ist vorgesehen, die Orientierungsgröße in Form einer Kippgröße festzulegen, mit der sowohl der Rollwinkel als auch der Nickwinkel im Sinne einer gemeinsamen Kippbewegung kombiniert wird.

Aus den erfassten Drehbewegungen des Zweirads lässt sich zudem ableiten, ob sich während des Unfalls ein Fahrer auf dem Fahrrad befunden hat. Dies ist insofern ein Vorteil, falls das Zweirad kein dem Sattel zugeordneter Gewichtssensor aufweist. So kann aus dem Bewegungsverlauf während einer seitlichen Drehung um die Längsachse erkannt werden, ob diese Bewegung streng monton beziehungsweise gleichförmig stetig ist oder verschiedene Störungen aufweist. Würde ein Zweirad ohne einen Fahrer umfallen, würde eine gleichförmige Bewegung beziehungsweise Beschleunigung erkannt werden, zum Beispiel mit Hilfe eines entsprechenden Drehratensignals. Falls sich der Fahrer jedoch noch auf dem Zweirad befindet, würde er instinktiv versuchen, den Fall abzubremsen, so dass sich im Bewegungsverlauf Änderungen der entsprechenden Geschwindigkeits-, Beschleunigungs- oder Drehratenkomponenten erkennen lassen müssten. Um ein gegebenenfalls vorhandenes Sensorrauschen zu eliminieren, welches eine falsches Ergebnis dieser Betrachtung herbei führen könnte, könnte das Sensorsignal mittels eines geeigneten Filters tiefpassgefiltert werden.

Mit der Erfassung der Aufprallgröße wird erkannt, ob das Zweirad auf ein Hindernis, z.B. den Boden, die Fahrbahn oder einen Gegenstand aufprallt. Hierbei kann ebenfalls die entsprechende Geschwindigkeits-, Beschleunigungs- oder Drehratenkomponente ausgewertet werden. So ist denkbar, dass nach dem Aufprallen das Zweirad kurz in die entgegen gerichtete Richtung federt, wenn es mit ausreichender Geschwindigkeit auf das Hindernis, z.B. den Boden aufschlägt. Denkbar ist auch, dass hierzu bewusst die Geschwindigkeits- oder Beschleunigungskomponente in Richtung der Hochachse herangezogen wird.

Weitere Vorteile ergeben sich aus der nachfolgenden Beschreibung von Ausführungsbeispielen bzw. aus den abhängigen Patentansprüchen.

Kurze Beschreibung der Zeichnungen

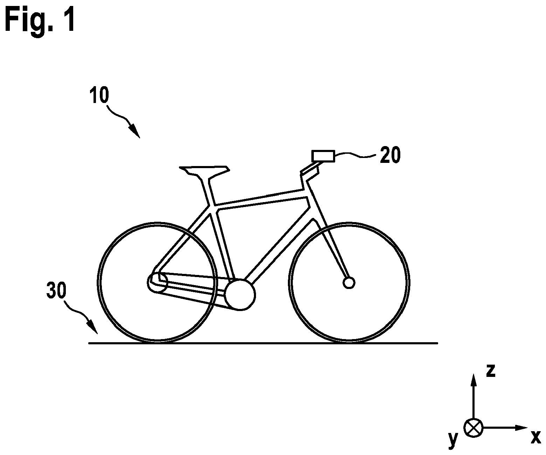

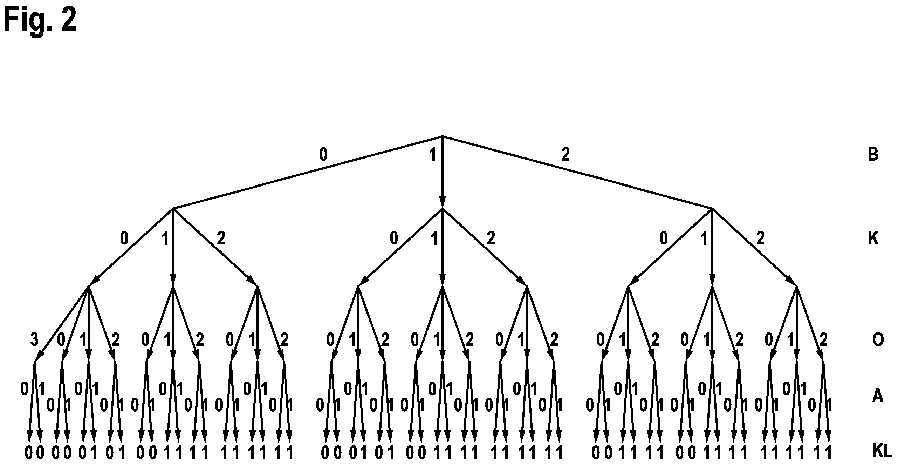

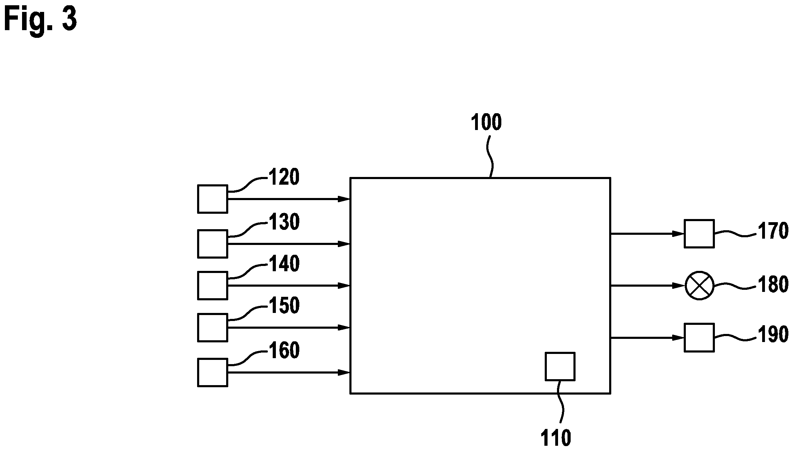

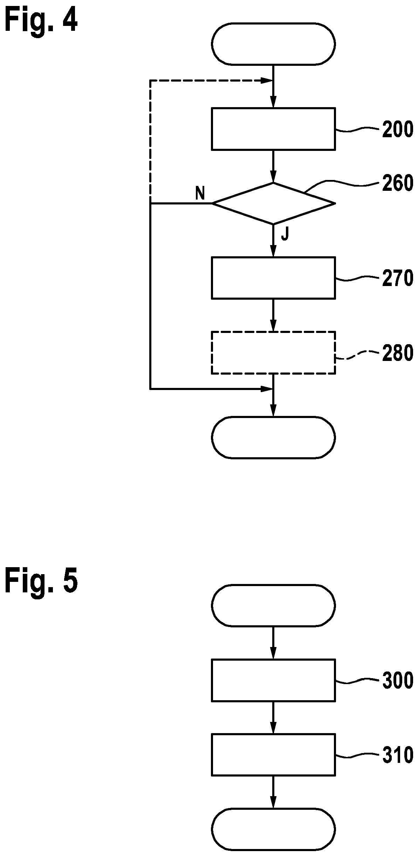

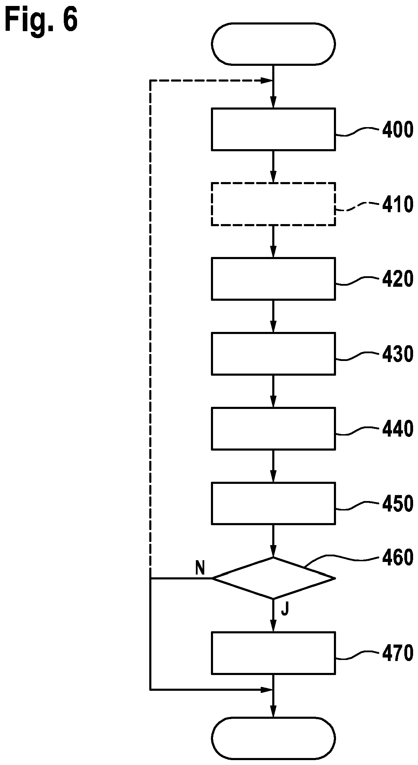

Figur 1 zeigt schematisch ein Zweirad mit einem mobilen Endgerät sowie ein Koordinatensystem, in welchem sich das Zweirad bei einer normalen Fahrtätigkeit auf dem Untergrund bewegt. In der Figur 2 ist ein Entscheidungsbaum dargestellt, mittels dem die erfindungsgemäße Klassifizierung verdeutlicht werden soll. Das Blockschaltbild der Figur 3 zeigt eine mögliche Realisierung einer erfindungsgemäßen Vorrichtung. Das Flussdiagramme der Figur 4 beschreibt ein erstes mögliches Ausführungsbeispiele des erfindungsgemäßen Verfahren. In dem Flussdiagramm der Figur 5 wird ein gesondertes Verfahren beschrieben, mittels dem die benötigten Sensorgrößen unabhängig von dem Vorgang der Klassifizierung erfasst werden können. Das Flussdiagramm der Figur 6 beschreibt eine zweite Ausführungsform des erfindungsgemäßen Verfahrens.

Ausführungsformen der Erfindung

Zur Beschreibung der Erfindung wird von einem Zweirad in Form eines Fahrrads 10 ausgegangen, wobei auch andere einspurige Fahrzeuge wie Elektrofahrräder, Motorräder, eScooter, Roller oder auch Kraftwägen mit dieser Erfindung ausgestattet sein könnte. Im vorliegenden Fall des Fahrrads 10 ist vorgesehen, dass ein Smartphone 20 als mobiles Endgerät vorgesehen ist, welches am Lenker des Fahrrads 10 angebracht ist und für die Erfassung und die Verarbeitung von Sensorgrößen und Sensordaten eingerichtet ist. Das Smartphone 20 dient hierbei beispielsweise als Navigationsinstrument, als Anzeige von fahrdynamischen Parameter und/oder zur Steuerung des Antriebs des Fahrrads 10. Zur Durchführung des erfindungsgemäßen Verfahrens greift das Smartphone 20 auf die Sensorgrößen zurück, die durch die im Smartphone 20 zur Verfügung stehenden Sensoren bereit gestellt werden. Alternativ oder optional zusätzlich kann das Smartphone 20 auch auf Sensoren zugreifen, die am Fahrrad 10 angebracht sind. Denkbar wären hier beispielsweise Beschleunigungssensoren an einem der Räder und/oder dem Rahmen sowie Winkelsensoren und Drehratensensoren. Das Fahrrad bewegt sich üblicherweise im Wesentlichen auf der Fahrbahn 30 in der Bewegungsebene xy in Längsrichtung x vorwärts. Durch Abbiege- und Kurvenfahrten wird die Bewegungsebene xy durch eine zusätzliche seitliche Querrichtung y aufgespannt. Eine Bewegung in Richtung der Hochachse z findet beispielsweise im Rahmen von Anstiegen und Bergabfahrten statt. Weitere Bewegungen, die sich in Richtung der Hochachse auswirken können, werden durch Rotationen in Richtung der x-Achse oder durch unebene Fahrbahnen erzeugt. Alle diese Bewegungen in Richtung der z-Achse lassen sich durch charakteristische Größenordnungen der Veränderungsgeschwindigkeit, d.h. der dz/dt, voneinander unterscheiden. So ist beispielsweise das Befahren eines Anstiegs oder einer Bergabfahrt mit einer längeren Zeitkonstanten verbunden als das seitliche Umkippen des Fahrrads im Wesentlichen entlang der x-Achse. Fahrbahnunebenheiten zeichnen sich dagegen durch sehr kleine Bewegungen in z-Richtung innerhalb kurzer Zeit aus.

Die Sensoren innerhalb des Smartphones 20 sind auf ihr eigenes Koordinatensystem ausgerichtet. Durch die Anbringung des Smartphones am Lenker ist daher eine Kalibrierung hinsichtlich der Ausrichtung in das durch die Bewegung festgelegte Koordinatensystem notwendig. So können die ortsaufgelösten Sensorgrößen des Drehratensensors beziehungsweise des Beschleunigungssensors im Smartphone dazu genutzt werden, während der normalen Fahrtätigkeit dieses definierte Koordinatensystem zu erfassen. Eine Möglichkeit, diese Kalibrierung durchzuführen, um die Sensorgrößen auf die Bewegungsebene xy des Fahrrads auszurichten ist beispielsweise die Methode der Eulerwinkelabschätzung.

Die erfindungsgemäße Klassifizierung erfasst mehrere Sensorgrößen, Zustandsgrößen und/oder Betriebsgrößen in Verbindung mit dem Betrieb des Zweirads, mittels der eine Aussage über eine Unfallsituation getroffen werden kann. Zur visuellen Darstellung dieser Klassifizierung ist in der Figur 2 ein Beispiel eines Entscheidungsbaum dargestellt, der beispielhafte Größen für eine Klassifizierung aufführt. Mit einer Bewegungsgröße B wird zunächst erfasst, ob sich das Zweirad in Ruhe befindet (=0), sich langsam bewegt, d.h. eine Geschwindigkeit aufweist, die unterhalb eines Schwellenwerts $SW_v$ liegt (=1) oder sich wenigstens mit der Geschwindigkeit des Schwellenwerts $SW_v$ bewegt (=2). Weiterhin wird erfasst, ob eine Kollision erkannt worden ist. Hierzu erfasst das Verfahren eine Kollisionsgröße K, mittels der sowohl das Fehlen einer erkannten Kollision (=0) erkannt werden kann als auch unterschieden werden kann, ob eine schwache Kollision (=1) oder eine starke Kollision (=2) vorliegt. Hierbei kann beispielsweise festgelegt werden, dass bei einer erkannten Kollision ohne weitere Information der Wert 1 und nur bei eindeutig vorliegenden Informationen, die das bestätigen eine 2 als Kollisionsgröße erfasst wird. Weiterhin wird die Orientierung des Zweirads anhand einer Orientierungsgröße O erfasst. Dabei kann grundsätzlich zwischen einer aufrechten, d.h. senkrechten, Orientierung (=0) und einer Orientierung unterschieden werden, in der sich das Zweirad aus der Senkrechten hinaus bewegt hat (=1, 2 oder 3), z.B. indem es waagerecht auf der Fahrbahn liegt. Da es sowohl bei der Orientierung als solches als auch bei der Bewegung, die zu der veränderten Orientierung aus der Senkrechten mehrere Möglichkeiten gibt, kann hier eine Fallunterscheidung durchgeführt werden. So kann zusätzlich zur Ausrichtung des Zweirads auch die Bewegung erfasst und bei der Ableitung der Orientierungsgröße O herangezogen werden. Vollführt das Zweirad beispielsweise einen Sturz über den Lenker, kann diese Unfallsituation mittels der Betrachtung des Nickwinkels θ bzw. dessen zeitlichen Veränderung erkannt werden (=1). Fällt das Zweirad jedoch seitlich um, dreht es sich also entlang der Längsrichtung x, so kann dies über den Rollwinkel φ oder deren Veränderung erkannt werden (=2). Denkbar ist auch, dass die Orientierungsgröße in Abhängigkeit von einer Kippgröße γ festgelegt wird, die eine kombinierte Drehung um die Längs- und Querachse

gemäß

$$\gamma = \sqrt{\theta^2 + \varphi^2}$$

repräsentiert. Weiter kann gegebenenfalls erkannt werden, dass das Zweirad umgefallen ist, ohne dass ein Fahrer auf dem Zweirad gesessen ist (=3). Dieser Fall wird normalerweise nur in Verbindung mit einer Unfall- oder allgemein Betriebssituation auftreten, bei der keine Kollision erkannt worden ist. Mit der Aufprallgröße A wird eine Situation erfasst, bei der das Zweirad mit einer ausreichend großen Kraft auf dem Boden, der Fahrbahn oder einem anderen Gegenstand aufprallt (=1). Dies kann beispielsweise durch die Erfassung der Bewegung des umfallenden oder kippenden Zweirads 10 erkannt werden. So kann ein Nachfedern des Zweirads beim Aufkommen auf den Boden mit einer Geschwindigkeitskomponenten in z-Richtung oder der entgegen gerichteten Richtung zum Fall ein Aufschlagen indizieren. Weiterhin kann die weitere Bewegung des Zweirads berücksichtigt werden, um einen Aufprall zu erkennen. Wird dagegen kein Aufprall erkannt, so wird die Orientierungsgröße entsprechend auf 0 gesetzt. Mit Hilfe eines derartigen Entscheidungsbaums kann eine Klassifizierung der Unfallsituation in KL=0, d.h. es liegt eine unbedenkliche Unfallsituation vor, bzw. eine normale Fahrsituation, und KL=1, d.h. es liegt eine Unfallsituation vor, in der zumindest Maßnahmen am Zweirad vorgenommen werden müssen, unterschieden werden. Die Einschätzung gemäß der Figur 2 ist dabei nur als Beispiel anzusehen und kann bei der Wahl der einzelnen Kriterien B, K, O und A zur Ableitung der Klassifikationsgröße KL auch anders gewählt werden. Darüber hinaus ist auch möglich, die Klassifikationsgröße als Datenbank oder Vektor der Klassifikationskriterien zu erfassen und auszuwerten.

Die Klassifizierung kann mittels eines erfindungsgemäßen Verfahrens in einer Vorrichtung durchgeführt werden. Hierzu ist in der Vorrichtung eine Auswerteeinheit 100 vorgesehen, welches das erfindungsgemäße Verfahren ausführt (siehe Figur 3). Die Auswerteeinheit 100 weist vorteilhafterweise einen Speicher 110 auf, in dem Schwellenwerte, Grenzwerte, Datenbank oder sonstige Informationen zur Durchführung der Klassifizierung abgelegt sind. Weiterhin kann der Speicher 110 zur Zwischenspeicherung von Sensorgrößen und zur Erfassung, Ableitung oder Erzeugung wenigstens einer der Bewegungsgröße O, der Kollisionsgröße K, der Orientierungsgröße O und/oder der Aufprallgröße A verwendet werden. Die Auswerteeinheit 100 ist dazu eingerichtet, die Sensorgrößen und/oder die Informationen verschiedener System zu erfassen, um daraus eine Klassifizierungsgröße KL abzuleiten. So kann ein Geschwindigkeitssensor 120 der Auswerteinheit 100 Geschwindigkeitssensorgrößen $v_x$ und $v_y$ liefern, die die Geschwindigkeitskomponenten des Zweirads 10 sowohl in x- als auch y-Richtung entsprechen. Denkbar ist jedoch auch, dass die Geschwindigkeitskomponenten jeweils von unterschiedlichen Geschwindigkeitssensoren erzeugt werden. Auch die Erfassung von Beschleunigungen $a_x$ und $a_y$ mittels wenigstens eines Beschleunigungssensors 120 in den Richtungen x und y ist möglich. Weiterhin ist denkbar, mittels eines oder mehrere Drehratensensoren die Drehraten $\omega_x$ um die Längsachse sowie um die Querachse $\omega_y$ zu erfassen. Hierbei kann es besonders vorteilhaft sein, zusätzlich die Zeitdauer zu erfassen, um über den Zeitraum, in der die Drehrate sich ändert, den Drehwinkel zu berechnen. Der Drehwinkel um die Längsachse x, d.h. der Rollwinkel $\varphi$, sowie der Drehwinkel um die Querachse , d.h. der Nickwinkel $\theta$, lassen sich jedoch darüber hinaus auch durch separate oder einen kombinierten Winkelsensor 150 erfassen. Bei der Bestimmung des Drehwinkel kann beispielsweise ebenfalls berücksichtigt werden, dass sich das Zweirad nach einer Drehung über einen vorgegebenen Zeitraum hinweg nicht mehr bewegt. Optional können darüber hinaus noch weitere Sensoren oder Systeme 160 vorliegen, die eine Klassifizierung und/oder Plausibilisierung der Klassifizierung einer Unfallsituation ermöglichen. Dabei kann das System 160 beispielsweise eine Kamera, einen Ultraschallsensor und/oder ein Mikrofon enthalten.

Sobald die Klassifizierung vorgenommen worden ist und eine Unfallsituation erkannt wurde, die ein Eingreifen, z.B. eine Hilfsmaßnahme, erfordert, kann die Auswerteeinheit 100 einen Notruf absetzen. Dieser Notruf kann an eine Hilfestelle 170 gerichtet sein, so dass automatisch nach Erkennung eines schweren Unfalls Hilfe herbei gerufen wird. Es kann jedoch auch Klassifizierungsgrößen geben, bei denen alternativ oder zusätzlich akustische und/oder optische Warneinrichtungen 180 des Zweirads 10 angesteuert werden. Hierdurch können sowohl der Fahrer als auch Dritte auf die spezielle Unfallsituation aufmerksam gemacht werden, beispielsweise indem vor Gefahr gewarnt wird oder der Fahrer auf das Umfallen des abgestellten Zweirads hingewiesen wird. Weiterhin kann die Auswerteeinheit 100 auch Komponenten 190 des Zweirads ansteuern, um weitere Schäden zu verhindern. So kann die Auswerteeinheit 100 einen noch in Betrieb befindlichen Antrieb abstellen, die Energiezufuhr der Batterie unterbrechen oder bewusst die Bremsen aktiveren.

Anhand des Flussdiagramms der Figur 4 soll zunächst ein erstes Ausführungsbeispiel des erfindungsgemäßen Verfahrens beschrieben werden. Nach dem Start des Verfahrens bzw. des Algorithmus' werden in einem ersten Schritt 200 alle notwendigen Sensorgrößen und Informationen, die für die Klassifizierung und die Ableitung der Klassifizierungsgröße KL erforderlich sind, erfasst oder eingelesen, insbesondere die Sensorgrößen $v_x$, $v_y$, $a_x$, $a_y$, $\omega_x$, $\omega_y$, $\theta$ und $\varphi$. Anschließend wird im Schritt 260 erkannt, ob eine Unfallsituation vorliegt, die eine Meldung an Dritte oder den Fahrer erforderlich macht (z.B. KL=1). Falls keine derartige Unfallsituation vorliegt, beispielsweise indem mit den Größen B=0 (keine Bewegungsgeschwindigkeit des Zweirads), K=0 (keine erkannte Kollision), O=0 (Zweirad steht aufrecht) und A=0 (kein Aufprall detektiert) die Wahrscheinlichkeit für einen Personenschaden des Fahrers des Zweirads oder einer unbeteiligten Person gering ist, kann das Verfahren beendet werden oder erneut mit dem Schritt 200 durchlaufen werden. Wird hingegen erkannt, dass eine Unfallsituation vorliegt, in der der Fahrer oder eine dritte Person Hilfe benötigt, beispielsweise bei einer der Klassifikation zugrunde liegenden Kombination der entsprechenden Größen B=2, K=2, O=1 (oder $\gamma$ sehr groß) und A=1 wird im nächsten Schritt 270 eine entsprechende Information für einen Hilferuf erzeugt. Dieser Hilferuf kann dann über eine drahtlose Verbindung ausgesendet werden, gegebenenfalls mit weiteren Informationen zur Unfallsituation. Optional kann vorgesehen sein, dass in einem nachfolgenden Schritt 280 wenigstens eine Komponente des Zweirads angesteuert oder abgeschaltet wird, beispielsweise um den Fahrer oder Dritte zu warnen oder weiteren Schaden durch die Komponente nach einem starken Unfall zu verhindern. Anschließend kann das Verfahren beendet werden.

Die Sensorgrößen $v_x$, $v_y$, $a_x$, $a_y$, $\omega_x$, $\omega_y$, $\theta$ und $\varphi$ können in einer weiteren Ausgestaltung der Erfindung auch unabhängig von der Klassifizierung erfasst und zur Verfügung gestellt werden. Hierzu können in einem Schritt 300 eines Verfahrens nach Anspruch 5 alle notwendigen Sensorgrößen erfasst und beispielsweise in dem Speicher 110 abgelegt werden. Falls notwendig, kann sich hier ein weiterer Schritt 310 anschließen, der die Sensorgrößen aufbereitet, z.B. indem die Kippgröße $\gamma$ berechnet wird. Durch die separate Erfassung und Aufbereitung der Sensorgrößen stehen der Klassifizierung ständig aktuelle Größen und Werte zur Verfügung. Entsprechend würde im ersten Ausführungsbeispiel nach Figur 4 der Schritt 200 entfallen.

Anhand des Flussdiagramms der Figur 6 wird ein zweites Ausführungsbeispiel des erfindungsgemäßen Verfahrens beschrieben. Wie schon beim ersten Ausführungsbeispiel kann das Verfahren beziehungsweise der Algorithmus aufgrund einer erkannten Unfallsituation, einer Kollision oder unabhängig davon in regelmäßigen Abständen gestartet werden. Nach dem Start werden in einem Schritt 400 die für das Verfahren notwendigen Sensorgrößen erfasst und in einem optionalen Schritt 410 aufbereitet. Optional können diese Schritte 400 und 410 jedoch auch entfallen, indem stattdessen das Verfahren nach Figur 5 unabhängig davon die entsprechenden Sensorgrößen und Werte erfasst und dem Verfahren nach Figur 6 zur Verfügung stellt.

Im nachfolgenden Schritt 420 wird geprüft, ob eine Bewegung des Zweirads vorliegt und der Bewegungsgröße B ein entsprechender Wert zugewiesen. So könnte beispielsweise der Bewegungsgröße eine 0 zugewiesen werden, wenn sich das Zweirad nicht bewegt, d.h. steht. Bewegt sich das Zweirad jedoch unterhalb einer Grenzgeschwindigkeit, die einem Schwellenwert $SW_v$ entspricht, so kann der Bewegungsgröße B eine 1 zugewiesen werden. Wenn das Zweirad zumindest die Grenzgeschwindigkeit $SW_v$ erreicht, erhält die Bewegungsgröße B eine 2.

Mit dem nächsten Schritt 430 wird geprüft, ob eine Kollision vorliegt. Je nachdem, welche Startbedingung für das Verfahren vorliegt, kann diese Information bereits durch das Initiieren des Verfahrens gegeben sein. Wird daher vom System erkannt, dass eine Kollision vorliegt, beispielsweise indem weitere Sensorgrößen erfasst oder ein weiteres dem Zweirad zugeordnetes System eine Information über eine Kollision erzeugt, wird der Kollisionsgröße K eine 1 zugeordnet. Wird dabei erkannt, dass eine starke Kollision vorgelegen hat, kann der Kollisionsgröße K auch eine 2 zugeordnet werden. Bei fehlender Kollision weist die Kollisionsgröße K eine 0 auf.

Der nächste Schritt 440 erfasst die Orientierung des Zweirads beziehungsweise die Änderung der Orientierung. So wird der Orientierungsgröße O eine 0 zugewiesen, falls erkannt wird, dass das Zweirad aufrecht steht. Dagegen wird der Orientierungsgröße O eine 3 zugewiesen, wenn das Zweirad liegt oder im Wesentlichen die aufrechte Lage verlassen hat. So kann beispielsweise vorgesehen sein, dass auch ein an eine Wand angelehntes Zweirad erkannt wird, wenn das Fahrrad ausreicht weit aus der Hochachse verkippt ist. In diesem Fall wäre eine dauerhafte (aufrechte) Fahrt mit dem Zweirad nicht möglich. Als weitere zusätzliche oder optionale Unterscheidungen kann vorgesehen sein, eine Nickbewegung des Zweirads zu erkennen, so dass bei einem ausreichend großen Nickwinkel, der auf einen Unfall oder Kollision hindeuten kann, die Orientierungsgröße O auf 1 gesetzt wird. Entsprechend wird bei einem ausreichend großen Rollwinkel, der auf einen Unfall, eine Kollision oder ein abstellen oder ablegen des Zweirads hinweist, der Orientierungsgröße O eine 2 zugeordnet. Alternativ kann bei der Zuweisung der Orientierungsgröße O auch die Berücksichtigung einer Kippgröße $\gamma$ vorgesehen sein, die sowohl eine Nickbewegung als auch eine Rollbewegung erfasst. So kann beispielsweise bei einer Kippgröße von $\gamma \geq 50°$ auf ein umgekipptes Zweirad geschlossen werden. Bei der Auswertung der entsprechenden Sensorgrößen zur Erfassung der Orientierungsgröße O kann vorgesehen sein, dass sowohl die Dynamik der Drehbewegung als auch deren Endlage berücksichtigt werden. Hierzu kann vorgesehen sein, dass die Orientierung des Zweirads erst dann zugewiesen wird, wenn sich das Zweirad eine vorgegebene Zeitdauer nicht mehr bewegt, d.h. für eine gewisse Zeitdauer keine Winkeländerung vorliegt.

Im nachfolgenden Schritt 450 wird anhand der erfassten Sensorgrößen oder weiterer Informationen erkannt, ob ein Aufprall vorgelegen hat. Liegt aufgrund der vorliegenden Sensorgrößen oder Informationen ein Aufprall vor, wird der Aufprallgröße A der Wert 1 zugewiesen, ansonsten der Wert 0.

In Abhängigkeit der so erfassten oder festgelegten Bewegungsgröße B, der Kollisionsgröße K, der Orientierungsgröße O und der Aufprallgröße A wird im nächsten Schritt 460 erkannt, ob eine Unfallsituation vorliegt, die eine Meldung erfordert. Bei dieser Meldung kann es sich beispielsweise um die Meldung eines Unfalls mit erbetener Hilfeleistung handeln. Hierzu kann jeder Kombination der festgelegten Größen B, K, O und A zum Beispiel gemäß eines Entscheidungsbaums der Figur 2 eine Entscheidung zugeordnet werden, nach der eine Mitteilung gesendet wird (=1) oder das Aussenden unterlassen wird (=0). Alternativ kann auch vorgesehen sein, dass zusätzliche Entscheidungen definiert werden (=2, 3, ..), die mit weiteren Mitteilungen oder Maßnahmen verbunden sind. So ist denkbar, für wenigstens eine Kombination der Größen B, K, O und A eine Entscheidung 2 zu definieren, die zwar keine Mitteilung im Sinne eines Not- oder Hilferufs darstellt, jedoch eine Information an eine vorgebbare Person erzeugt, beispielsweise für Informationszwecke. So könnte der Fahrer darüber informiert werden, dass ein abgestelltes Zweirads umgefallen ist (z.B. B=0, K=0, O=2, A=1). Wird aufgrund der erfassten Größen B, K, O und A erkannt, dass keine Mitteilung an den Fahrer oder an Dritte notwendig ist, kann das Verfahren beendet werden oder erneut mit Schritt 400 beziehungsweise 420 durchlaufen werden.

Nach der Erkennung, dass eine Mitteilung ausgesandt werden soll, werden im Schritt 470 entsprechende Maßnahmen eingeleitet. Diese Maßnahmen können darin bestehen, ein weiteres System am Zweirad oder bei einem vom Fahrer mitgeführten mobilen Endgerät zu aktivieren, beispielsweise um über Funk einen Notruf abzusetzen. Es kann jedoch auch vorgesehen sein, dass die Vorrichtung, in der das erfindungsgemäße Verfahren abläuft, selbst über eine Einrichtung verfügt, mittels der eine Notleitstelle erreicht oder generell ein Notruf abgesetzt werden kann. Hilfreich ist in diesem Fall, wenn noch weitere Information zur Unfallsituation oder der Kollision übertragen werden, um den Rettungskräften vorab ausreichende Information zukommen zu lassen. Optional kann auch vorgesehen sein, dass im Schritt 470 aufgrund der erkannten Unfallsituation oder Kollision Zweiradkomponenten angesteuert werden, um den Fahrer oder weitere Personen zu schützen oder auf den Unfall aufmerksam zu machen. Denkbar wäre beispielsweise, dass durch ein Entscheidungsereignis "3" im Schritt 460 erkannt wird, dass zwar kein Notruf abgesetzt werden muss, jedoch aus Sicherheitsgründen der Motor und/oder die Batterie eines elektrisch betriebenen Zweirads deaktiviert werden muss.

In weiteren Ausführungsbeispielen kann vorgesehen sein, dass die Schritte 420 bis 450 in einer anderen Reihenfolge angeordnet sind oder parallel ausgeführt werden. Optional kann auch vorgesehen sein, dass nicht alle der genannten Größen festgelegt werden, zum Beispiel in einem Fall, in dem das Verfahren erst bei erkannter Kollision gestartet wird. Weiterhin ist denkbar, dass zusätzliche Größen erfasst und für die Klassifizierung berücksichtigt werden. Hierbei könnte beispielsweise eine Schadensgröße S erfasst oder berücksichtigt werden, die einen (körperlichen) Schaden des Fahrers repräsentiert. Zur Ableitung weiterer Größen im Rahmen des Entscheidungsbaums oder zur Plausibilisierung der Festlegung der einzelnen Größen B, K, O oder A können zusätzliche Sensorgrößen oder Messwerte herangezogen werden. Denkbar wären beispielsweise die Erfassung der Herzfrequenz, das Umgebungsgeräusch mittels eines Mikrofons, die bildliche Erfassung des Fahrers oder der Umgebung mittels einer Kamera oder die Verwendung weiterer Sensoren am Zweirad.

Statt eine eindeutigen Zuweisung sowohl der einzelnen Größen B, K, O oder A zu den entsprechenden Werte und/oder der Entscheidung in den Schritten 270 und 470 können auch Wahrscheinlichkeitswerte verwendet werden, die beispielsweise in der Datenbank 110 hinterlegt sind. Diese Wahrscheinlichkeitswerte können fest vorgegeben oder variabel angepasst ausgestaltet sein. So ist denkbar, ein lernbares System in der Auswerteinheit oder auf einem externen Server vorliegen zu haben, welches die Wahrscheinlichkeiten anpasst, dass eine Unfallsituation oder eine Kollision vorliegt, die eine Meldung erfordert. Über eine Funkverbindung, die auch für die Mitteilung verwendet werden kann, kann so die Datenbank aufgrund der Erfahrung einer Vielzahl von Zweiradnutzungen angepasst oder erweitert werden.

Die Schritte 420 bis 450 können einzeln oder vollständig auch in Form von Entscheidungen ausgestaltet sein. Dabei können alle Ergebnisse, die dazu führen, dass im Schritt 470 keine Meldung erzeugt wird, dazu führen, dass das Verfahren abgebrochen oder mit der Erfassung der Sensorgrößen erneut durchlaufen wird.

Weiterhin kann vorgesehen sein, dass nicht alle für die Entscheidung in den Schritten 260 oder 460 vorliegenden Sensorgrößen zeitgleich vorliegen. So ist denkbar, dass einige Sensorgrößen erst nach dem Ablauf eines teilweise vorgegebenen oder bestimmbaren Zeitraums vorliegen. Dies kann dadurch erreicht werden, dass zusätzlich geprüft wird, ob in den Schritten 420 bis 450 die erfassten Sensorgrößen für eine Zuweisung der Größen B, K, O oder A oder im Schritt 260 oder 460 die vorliegenden Bewegungen für die Entscheidung ausreichen. Sollte das nicht der Fall sein, kann erneut mit der Erfassung der entsprechenden Sensorgrößen das Verfahren durchlaufen werden. Alternativ kann die jeweilige Zuweisung oder die Entscheidung auch angehalten werden, bis die entsprechende Bewegung abgeschlossen ist oder aussagekräftige Sensorgrößen vorliegen. Wie bereits anhand des Verfahrens nach Figur 5 ausgeführt, können die entsprechenden Sensorgrößen auch parallel permanent erzeugt werden, so dass das Verfahren in den Schritten 420 bis 450 auf aktuelle Sensorgrößen, Messwert und Ergebnisse zurückgreifen kann.

**Patentansprüche**

1.   Verfahren zur Klassifizierung eines Unfallvorgangs eines Zweirads (10), insbesondere eines Fahrrads, wobei das Verfahren wenigstens

• eine Bewegungsgröße (B) erfasst, die die Bewegung des Zweirads (10) repräsentiert, und

• eine Kollisionsgröße (K) erfasst, die die Kollision des Zweirads (10) mit einem Hindernis repräsentiert, und

• eine Orientierungsgröße (O) erfasst, die die Orientierung und/oder die Änderung der Orientierung des Zweirads insbesondere in Längs- oder Bewegungsrichtung des Zweirads (10) repräsentiert, und

• eine Aufprallgröße (A) erfasst, die den Aufprall des Zweirads (10) insbesondere auf die Fahrbahn repräsentiert, und

• eine Klassifizierungsgröße (KL) in Abhängigkeit der Bewegungsgröße, der Kollisionsgröße, der Orientierungsgröße und der Aufprallgröße erzeugt.

2. Verfahren nach Anspruch 1, **dadurch gekennzeichnet, dass** die Klassifizierungsgröße (KL) eine Information über die Schwere des Unfalls repräsentiert, wobei vorgesehen ist, dass das Verfahren

• in Abhängigkeit der Klassifizierungsgröße (KL), insbesondere bei Vorliegen eines schweren Unfalls, eine Information erzeugt, die für Rettungszwecke verwendet werden kann,

wobei insbesondere vorgesehen ist, dass das Verfahren

• bei der Erkennung eines schweren Unfalls einen Notruf aussendet.

3. Verfahren nach Anspruch 1 oder 2, **dadurch gekennzeichnet, dass** das Verfahren

• in Abhängigkeit der Klassifizierungsgröße (KL) eine Komponente des Zweirads ansteuert, insbesondere eine akustische und/oder optische Warneinrichtung (180) oder eine in Betrieb befindliche Komponente, abschaltet, insbesondere eine Antriebseinheit (190).

4. Verfahren nach einem der vorhergehenden Ansprüche, **dadurch gekennzeichnet, dass** die Klassifizierungsgröße (KL) eine Information über eine Unfallsituation aufweist, bei dem sich kein Fahrer auf dem Zweirads befunden hat, wobei vorgesehen ist, dass das Verfahren

• in Abhängigkeit der Klassifizierungsgröße (KL), insbesondere bei Vorliegen eines Unfalls ohne dass sich ein Fahrer auf dem Zweirads (10) befunden hat, dem Fahrer oder einem vorgegeben Dritten eine Information übermittelt.

5. Verfahren nach einem der vorhergehenden Ansprüche, **dadurch gekennzeichnet, dass** das Verfahren als Bewegungsgröße (B)

• eine Geschwindigkeitsgröße und/oder
• eine Beschleunigungsgröße

erfasst, die die Bewegung des Zweirads (10) oder eines Teil des Zweirads (10) repräsentiert, wobei insbesondere vorgesehen ist, dass die Bewegungsgröße (B) die Bewegung wenigstens gesondert in Längsrichtung und Querrichtung repräsentiert.

6. Verfahren nach einem der vorhergehenden Ansprüche, **dadurch gekennzeichnet, dass** das Verfahren zur Erzeugung der Kollisionsgröße (K) eine Kollision des Zweirads (10) mit einem Gegenstand und/oder einer Person erfasst, die sich auf der Fahrebene des Zweirads (10) befindet, wobei insbesondere vorgesehen ist, dass die Kollision in Abhängigkeit einer zeitlichen Änderung der Geschwindigkeit und/oder Beschleunigung des Zweirads (10) in wenigstens einer Raumrichtung erfasst wird.

7. Verfahren nach einem der vorhergehenden Ansprüche, **dadurch gekennzeichnet, dass** das Verfahren als Orientierungsgröße (O)

• eine Rollbewegung um die Längsachse (x), und/oder
• eine Nickbewegung des Zweirads (10) um die Querachse (y), erfasst,

wobei insbesondere vorgesehen ist, dass als Orientierungsgröße (O)

• ein Rollwinkel (cp), und/oder
• ein Nickwinkel (θ)

erfasst wird.

8. Verfahren nach Anspruch 7, **dadurch gekennzeichnet, dass** als Orientierungsgröße (O) eine Kippgröße γ in Abhängigkeit des erfassten Rollwinkels (cp) und des erfassten Nickwinkels (θ) gemäß

$$\gamma = \sqrt{\theta^2 + \varphi^2}$$

erzeugt wird.

9. Verfahren nach Anspruch 4 und Anspruch 7, **dadurch gekennzeichnet, dass** die Klassifizierungsgröße (KL), die eine Information über eine Unfallsituation aufweist, bei dem sich kein Fahrer auf dem Zweirad befunden hat, wenigstens in Abhängigkeit von dem zeitlichen Verlauf der erfassten Rollbewegung und/oder der zeitlichen Änderung des Rollwinkels (cp) erzeugt wird, wobei insbesondere vorgesehen ist, dass das Verfahren bei einem streng monotonen oder gleichförmig stetigen Verlauf des zeitlichen Verlauf der erfassten Rollbewegung und/oder der zeitlichen Änderung des Rollwinkels erkannt wird, dass sich kein Fahrer während der Unfallsituation auf dem Zweirad befunden hat.

10. Verfahren nach einem der vorhergehenden Ansprüche, **dadurch gekennzeichnet, dass** das Verfahren zur Erzeugung der Aufprallgröße (A) eine zeitliche Änderung der Geschwindigkeit und/oder der Beschleunigung in wenigstens einer Bewegungsrichtung des Zweirads (10) erfasst, wobei insbesondere vorgesehen ist, dass das zeitliche Verhalten der Änderung der Geschwindigkeit und/oder der Beschleunigung in Richtung der Querachse des Zweirads erfasst wird.

11. Vorrichtung zur Klassifizierung eines Unfallvorgangs eines Zweirads (10), insbesondere eines Fahrrads, mit einer Auswerteeinheit (100), die ein Verfahren nach einem der Ansprüche 1 bis 10 ausführt, wobei die Auswerteeinheit (100) wenigstens

    • eine Bewegungsgröße (B) erfasst, die die Bewegung des Zweirads (10) repräsentiert, und
    • eine Kollisionsgröße (K) erfasst, die die Kollision des Zweirads (10) mit einem Hindernis repräsentiert, und
    • eine Orientierungsgröße (O) erfasst, die die Orientierung und/oder die Änderung der Orientierung des Zweirads insbesondere in Längs- oder Bewegungsrichtung des Zweirads (10) repräsentiert, und
    • eine Aufprallgröße (A) erfasst, die den Aufprall des Zweirads (10) insbesondere auf die Fahrbahn repräsentiert, und
    • eine Klassifizierungsgröße (KL) in Abhängigkeit der Bewegungsgröße, der Kollisionsgröße, der Orientierungsgröße und der Aufprallgröße erzeugt.

12. Vorrichtung nach Anspruch 11, **dadurch gekennzeichnet, dass** die Auswerteeinheit (100)

    • in Abhängigkeit der Klassifizierungsgröße (KL), insbesondere bei Vorliegen eines schweren Unfalls, einen Notruf absendet.

13. Vorrichtung nach Anspruch 11 oder 12, **dadurch gekennzeichnet, dass** die Auswerteeinheit (100)

    • in Abhängigkeit der Klassifizierungsgröße (KL)

        ◦ eine Komponente des Zweirads ansteuert, insbesondere eine akustische und/oder optische Warneinrichtung (180) oder
        ◦ eine in Betrieb befindliche Komponente, abschaltet, insbesondere eine Antriebseinheit (190).

14. Zweirad (10) mit einer Vorrichtung nach einem der Ansprüche 11 bis 13.

**Claims**

1. Method for classifying an accident event involving a two-wheeled vehicle (10), in particular a bicycle, wherein the method at least

    • detects a movement variable (B) which represents the movement of the two-wheeled vehicle (10), and
    • detects a collision variable (K) which represents the collision of the two-wheeled vehicle (10) with an obstacle, and
    • detects an orientation variable (O) which represents the orientation and/or the change in the orientation of the two-wheeled vehicle, in particular in the longitudinal or movement direction of the two-wheeled vehicle (10), and
    • detects an impact variable (A) which represents the impact of the two-wheeled vehicle (10), in particular with the roadway, and
    • generates a classification variable (KL) as a function of the movement variable, the collision variable, the orientation variable and the impact variable.

2. Method according to Claim 1, **characterized in that** the classification variable (KL) represents an item of information about the severity of the accident, wherein provision is made for the method

    • to generate an item of information, which can be used for rescue purposes, as a function of the classification variable (KL), in particular in the case of a severe accident,

wherein provision is made in particular for the method

    • to send out an emergency call when a severe accident is identified.

3. Method according to Claim 1 or 2, **characterized in that** the method

    • actuates a component of the two-wheeled vehicle, in particular switches off an acoustic and/or optical warning device (180) or a component which is in operation, in particular a drive unit (190), as a function of the classification variable (KL) .

**4.** Method according to one of the preceding claims, **characterized in that** the classification variable (KL) contains an item of information about an accident situation in which there was no rider on the two-wheeled vehicle,
wherein provision is made for the method

• to transmit an item of information to the rider or a prespecified third-party as a function of the classification variable (KL), in particular in the case of an accident without there being a rider on the two-wheeled vehicle (10).

**5.** Method according to one of the preceding claims, **characterized in that** the method detects, as the movement variable (B),

• a speed variable and/or
• an acceleration variable

which represents the movement of the two-wheeled vehicle (10) or of a portion of the two-wheeled vehicle (10),
wherein provision is made in particular for the movement variable (B) to represent the movement at least separately in the longitudinal direction and the transverse direction.

**6.** Method according to one of the preceding claims, **characterized in that** the method for generating the collision variable (K) detects a collision of the two-wheeled vehicle (10) with an object and/or a person which/who is located on the plane of travel of the two-wheeled vehicle (10),
wherein provision is made in particular for the collision to be detected as a function of a change in the speed and/or acceleration of the two-wheeled vehicle (10) over time in at least one spatial direction.

**7.** Method according to one of the preceding claims, **characterized in that** the method detects, as the orientation variable (O),

• a rolling movement about the longitudinal axis (x) and/or
• a pitching movement of the two-wheeled vehicle (10) about the transverse axis (y),

wherein provision is made in particular for

• a roll angle ($\varphi$) and/or
• a pitch angle ($\Theta$)

to be detected as the orientation variable (O).

**8.** Method according to Claim 7, **characterized in that**, as the orientation variable (O), a tilting variable $\gamma$ is generated as a function of the detected roll angle ($\varphi$) and the detected pitch angle ($\Theta$) in accordance with

$$\gamma = \sqrt{\Theta^2 + \varphi^2}$$

**9.** Method according to Claim 4 and Claim 7, **characterized in that** the classification variable (KL) which contains an item of information about an accident situation in which there was no rider on the two-wheeled vehicle is generated at least as a function of the time profile of the detected rolling movement and/or the change in the roll angle ($\varphi$) over time, wherein provision is made in particular for the method to identify that there was no rider on the two-wheeled vehicle during the accident situation in the case of a strictly monotonic or uniformly continuous profile of the time profile of the detected rolling movement and/or the change in the roll angle over time.

**10.** Method according to one of the preceding claims, **characterized in that** the method for generating the impact variable (A) detects a change in the speed and/or the acceleration over time in at least one movement direction of the two-wheeled vehicle (10), wherein provision is made in particular for the temporal behaviour of the change in the speed and/or the acceleration in the direction of the transverse axis of the two-wheeled vehicle to be detected.

**11.** Apparatus for classifying an accident event involving a two-wheeled vehicle (10), in particular a bicycle, comprising an evaluation unit (100) which executes a method according to one of Claims 1 to 10, wherein the evaluation unit (100) at least

• detects a movement variable (B) which represents the movement of the two-wheeled vehicle (10), and
• detects a collision variable (K) which represents the collision of the two-wheeled vehicle (10) with an obstacle, and
• detects an orientation variable (O) which represents the orientation and/or the change in the orientation of the two-wheeled vehicle, in particular in the longitudinal or movement direction of the two-wheeled vehicle (10), and
• detects an impact variable (A) which represents the impact of the two-wheeled vehicle (10), in particular with the roadway, and
• generates a classification variable (KL) as a function of the movement variable, the collision variable, the orientation variable and the impact variable.

**12.** Apparatus according to Claim 11, **characterized in that** the evaluation unit (100)

• sends an emergency call as a function of the classification variable (KL), in particular in the event of a severe accident.

**13.** Apparatus according to Claim 11 or 12, **characterized in that** the evaluation unit (100),

- as a function of the classification variable (KL),

o actuates a component of the two-wheeled vehicle, in particular an acoustic and/or optical warning device (180), or
o switches off a component which is in operation, in particular a drive unit (190) .

**14.** Two-wheeled vehicle (10) comprising an apparatus according to one of Claims 11 to 13.

**Revendications**

**1.** Procédé permettant de classifier un déroulement d'accident d'un deux-roues (10), en particulier d'une bicyclette, dans lequel le procédé détecte au moins

- une grandeur de mouvement (B) qui représente le mouvement du deux-roues (10), et
- une grandeur de collision (K) qui représente la collision du deux-roues (10) avec un obstacle, et
- une grandeur d'orientation (O) qui représente l'orientation et/ou le changement de l'orientation du deux-roues, en particulier dans la direction longitudinale ou de mouvement du deux-roues (10), et
- une grandeur d'impact (A) qui représente l'impact du deux-roues (10), en particulier sur la chaussée, et
- génère une grandeur de classification (KL) en fonction de la grandeur de mouvement, de la grandeur de collision, de la grandeur d'orientation et de la grandeur d'impact.

**2.** Procédé selon la revendication 1, **caractérisé en ce que** la grandeur de classification (KL) représente une information concernant la gravité de l'accident, dans lequel il est prévu que le procédé

- génère en fonction de la grandeur de classification (KL), en particulier en présence d'un accident grave, une information qui peut être utilisée à des fins de secours,

dans lequel il est prévu en particulier que le procédé

- émette un appel de détresse lorsqu'un accident grave est identifié.

**3.** Procédé selon la revendication 1 ou 2, **caractérisé en ce que** le procédé

- pilote en fonction de la grandeur de classification (KL) un composant du deux-roues, en particulier un équipement d'avertissement acoustique et/ou optique (180) ou met hors tension un composant en cours de fonctionnement, en particulier une unité d'entraînement (190).

**4.** Procédé selon l'une quelconque des revendications précédentes, **caractérisé en ce que** la grandeur de classification (KL) présente une information concernant une situation d'accident dans laquelle aucun conducteur ne se trouvait sur le deux-roues, dans lequel il est prévu que le procédé

- transmette en fonction de la grandeur de classification (KL), en particulier en présence d'un accident sans conducteur sur le deux-roues (10), une information au conducteur ou à un tiers prédéfini.

**5.** Procédé selon l'une quelconque des revendications précédentes, **caractérisé en ce que** le procédé détecte comme grandeur de mouvement (B)

- une grandeur de vitesse, et/ou
- une grandeur d'accélération

qui représente le mouvement du deux-roues (10) ou d'une partie du deux-roues (10), dans lequel il est prévu en particulier que la grandeur de mouvement (B) représente le mouvement au moins séparément dans la direction longitudinale et la direction transversale.

**6.** Procédé selon l'une quelconque des revendications précédentes, **caractérisé en ce que** le procédé détecte pour la génération de la grandeur de collision (K) une collision du deux-roues (10) avec un objet et/ou une personne qui se trouve (nt) sur le plan de circulation du deux-roues (10), dans lequel il est prévu en particulier que la collision soit détectée en fonction d'un changement dans le temps de la vitesse et/ou de l'accélération du deux-roues (10) dans au moins une direction spatiale.

**7.** Procédé selon l'une quelconque des revendications précédentes, **caractérisé en ce que** le procédé détecte comme grandeur d'orientation (O)

- un mouvement de roulis autour de l'axe longitudinal (x), et/ou
- un mouvement de tangage du deux-roues (10) autour de l'axe transversal (y),

dans lequel il est prévu en particulier

- qu'un angle de roulis ($\varphi$), et/ou
- un angle de tangage ($\theta$)

soi(ent) détecté(s) comme grandeur d'orientation (O).

8. Procédé selon la revendication 7, **caractérisé en ce qu'**une grandeur de basculement γ est générée comme grandeur d'orientation (O) en fonction de l'angle de roulis (φ) détecté et de l'angle de tangage (θ) détecté selon

$$\gamma = \sqrt{\theta^2 + \varphi^2}.$$

9. Procédé selon la revendication 4 et la revendication 7, **caractérisé en ce que** la grandeur de classification (KL), qui présente une information concernant une situation d'accident dans laquelle aucun conducteur ne se trouvait sur le deux-roues, est générée au moins en fonction de la courbe dans le temps du mouvement de roulis détecté et/ou du changement dans le temps de l'angle de roulis (φ), dans lequel il est prévu en particulier, dans le cas d'une loi strictement monotone ou uniformément continue de la courbe dans le temps du mouvement de roulis détecté et/ou du changement dans le temps de l'angle de roulis, que le procédé identifie qu'aucun conducteur ne se trouvait sur le deux-roues pendant la situation d'accident.

10. Procédé selon l'une quelconque des revendications précédentes, **caractérisé en ce que** pour la génération de la grandeur d'impact (A), le procédé détecte un changement dans le temps de la vitesse et/ou de l'accélération dans au moins une direction de mouvement du deux-roues (10), dans lequel il est prévu en particulier que le comportement dans le temps du changement de la vitesse et/ou de l'accélération en direction de l'axe transversal du deux-roues soit détecté.

11. Dispositif permettant de classifier un déroulement d'accident d'un deux-roues (10), en particulier d'une bicyclette, comprenant une unité d'évaluation (100) qui exécute un procédé selon l'une quelconque des revendications 1 à 10, dans lequel l'unité d'évaluation (100) détecte au moins

• une grandeur de mouvement (B) qui représente le mouvement du deux-roues (10), et
• une grandeur de collision (K) qui représente la collision du deux-roues (10) avec un obstacle, et
• une grandeur d'orientation (O) qui représente l'orientation et/ou le changement de l'orientation du deux-roues, en particulier dans la direction longitudinale ou de mouvement du deux-roues (10), et
• une grandeur d'impact (A) qui représente l'impact du deux-roues (10), en particulier sur la chaussée, et
• génère une grandeur de classification (KL) en fonction de la grandeur de mouvement, de la grandeur de collision, de la grandeur d'orientation et de la grandeur d'impact.

12. Dispositif selon la revendication 11, **caractérisé en ce que** l'unité d'évaluation (100)

• émet un appel de détresse en fonction de la grandeur de classification (KL), en particulier en présence d'un accident grave.

13. Dispositif selon la revendication 11 ou 12, **caractérisé en ce que** l'unité d'évaluation (100)

• en fonction de la grandeur de classification (KL)

o pilote un composant du deux-roues, en particulier un équipement d'avertissement acoustique et/ou optique (180), ou
o met hors tension un composant en cours de fonctionnement, en particulier une unité d'entraînement (190).

14. Deux-roues (10) comprenant un dispositif selon l'une quelconque des revendications 11 à 13.

**Fig. 1**

# Fig. 2

Fig. 3

**Fig. 4**

**Fig. 5**

**Fig. 6**

400

410

420

430

440

450

460

470

**IN DER BESCHREIBUNG AUFGEFÜHRTE DOKUMENTE**

**In der Beschreibung aufgeführte Patentdokumente**

- DE 102009036828 A1